# EUROPEAN PATENT APPLICATION

(11) **EP 2 052 781 A1**
(43) Date of publication of application: **29.04.2009**
(21) Application number: 07118926.0
(22) Date of filing: 19.10.2007
(51) Int. Cl.: B03B 9/06, H01J 9/52, B09B 3/00, C03C 1/00

(54) **Operative station for the recovery of the raw materials deriving from the demolition of kinescopes**

(71) Applicant: Cora', Marco Enrico, 36078 Valdagno (Vicenza) (IT)
(72) Inventor: Cora', Marco Enrico, 36078 Valdagno (Vicenza) (IT)
(74) Representative: Iannone, Carlo Luigi

(57) **Abstract**

An operative station (1) for the recovery of raw materials deriving from the demolition of kinescopes, comprising a carrying structure (2) which is associated with a supporting surface (S), a container (3), internally associated with the carrying structure (2), which receives the raw materials deriving from the demolition of kinescopes and which is connected to driving means suitable for moving it for effecting the cleaning of the raw materials, conveying and unloading means (4), situated inside the carrying structure (2) for their re-use and collection and ejection means (5), contained in the carrying structure (2), which collect the scraps deriving from the cleaning of the raw materials.

## Description

The present invention relates to an operative station for the recovery of the raw materials deriving from the demolition of kinescopes.

As is known, for television kinescopes, radar or computer screens and, in general, devices having a visualization screen, there is the problem of disposal when they cease to be used or are discarded as a result of production defects.

It should be pointed out that the kinescope of the above-mentioned equipment generally comprises, in its main sections, an external structure, some electric elements, a glass cone, both externally and internally covered with a metal layer, and a glass screen whose inner surface is coated with a phosphorous layer.

The glass of the screen has an optical quality which is different and higher than that of the glass forming the cone.

Various components are situated between the glass screen and the glass cone, some of which are made of a metal material, such as the safety frame or mask (known as "shadow mask").

With this constructive composition, it is necessary to separate the various compositional elements, before their demolition, in order to effectively dispose of kinescopes from a technical and economical point of view and, at the same time, safely from an environmental point of view.

The demolition of kinescopes is mainly effected with the aim of recycling the wreckage for other uses, if this is possible.

At present, the demolition operation of kinescopes is effected manually or, more conveniently, by means of machines which break the components in a controlled and selective way, with particular care for the removal of the layer of phosphorous particles present on the inner surface of the screen.

In any case, in order to reach a high degree of recovery of the raw materials, especially the glass parts, generated by the demolition of kinescopes, it is necessary to subject them to cleaning operations or further separation of slag or impurities with which they are inevitably mixed after demolition.

This also complies with the law requirements imposed, for example, in Italy, by the Law Decree nr. 22/97, which establish, with respect to the total quantity treated, the minimum amount of waste material to be recovered.

These quantities are much higher than those deriving from the separation and demolition operations of kinescopes effected with the traditional methods.

The above slag or impurities include powder particles, the residual phosphorous layer which still covers the pieces of glass or crystal and the contaminants removed from these pieces by generic cleaning and mixed with these.

According to the known art, the at least partial elimination of this residual slag from the starting material deriving from the demolition of kinescopes, is effected by subjecting said raw materials to a series of treatments in several apparatuses.

A similar operative method is described, for example, in the patent US 5,316,510 relating to the process and relative device for the recycling of coated glass, in particular glass belonging to cathode ray tubes.

The equipment described therein, destined for the deep and almost complete cleaning of the glass produced by the breakage of kinescopes, includes mixing elements, preferably a free-fall mixer, wherein the reciprocal friction of the glass pieces effects their cleaning from the phosphorous surface layer.

The mixing unit is connected upstream, through a conveyer belt, to the machine in which the demolition has been effected, with the gross cleaning of the kinescopes and, downstream, with a sieve equipped with a blowing device which frees the glass or crystal raw materials from the remaining phosphorous particles covering them.

The washing water present in the circuit is sent, by means of a pump, to a filter in which it is separated from the small glass particles and the coating contaminants contained therein, removed by friction in the mixing unit and by blowing in the relative device.

The washing water is thus purified and is sent back into circulation inside the mixing unit, in order to effect a further cycle.

The cleaned glass raw materials contained in the sieving device are sent, on the contrary, by another conveyer belt, to a container from which they are collected for a new use.

The main disadvantage which is encountered in the equipment described above, destined for the recovery of the raw materials produced by the demolition of kinescopes, consists in the fact that the apparatuses used are separate and independent of each other, reciprocally connected by suitable piping or conveyor belts.

This causes a certain construction complexity of the plants, and also high encumbrance in the production facilities.

Another drawback is that the single items of equipment can only be moved after separation from the adjacent units to which they are operatively and mechanically connected, which is a laborious operation.

A further disadvantage is therefore due to the fact that for moving the entire device or plant from one point to another, for example as a result of lay-out changes or moving of the production site, the various machines must be physically separated, moved to the new location, then installed and connected to each other, with evident disadvantages in terms of cost and time.

A last but not least drawback derives from the fact that these solutions use water in the operating process, thus consuming an important and non-regenerable natural resource which, in addition, after the use, causes an evident environmental impact due to its difficult disposal.

The present invention proposes to overcome the drawbacks of the known prior art mentioned above.

In particular, the main objective of the invention is to provide an operative station for the recovery of raw materials deriving from the demolition of kinescopes having a simpler constructive concept with respect to equivalent known devices or plants.

In other words, the invention proposes to provide an operative station which within itself contains the organs capable of effecting the operations which, in the present state of the art, are carried out by different machines, connected by connection means.

A second objective of the invention is to reduce the encumbrance, with respect to the state of the art, in the production facilities, created by equipment dedicated to the cleaning for the recycling of raw materials deriving from the demolition of kinescopes.

Another objective of the invention is to provide an operative station for the recovery of raw materials deriving from the demolition of kinescopes, which is movable and can be installed in shorter times and with lower costs with respect to the known art.

A further objective of the present invention is that said operative station can be moved more easily from one place to another with respect to the current plants of common use.

Yet another objective of the invention is to reduce, with respect to the known art, the environmental impact associated with operations in some way related to the demolition of kinescopes.

The above objectives are achieved by an operative station for the recovery of raw materials deriving from the demolition of kinescopes according to the enclosed claim 1, to which reference should be made for the sake of brevity.

Other detailed characteristics of the operative station according to the invention are provided in the subsequent dependent claims.

The operative station advantageously allows what is normally, in the known art, distributed on different machines connected by connection means, to be joined in a single structure.

In this way, the encumbrance is reduced, saving space inside the production facilities.

The invention again advantageously simplifies, with respect to the present state of the art, the constructive complexity linked to machinery destined for the recovery of raw materials deriving from the demolition of kinescopes.

The operative station of the invention can be advantageously moved with a single manoeuvre, thanks to its compact structure.

In addition, the station of the invention can be moved in shorter times and with more practicality and comfort with respect to the known equipment with equivalent functions.

The invention advantageously simplifies, with respect to the known art, the activities associated with the demolition of kinescopes, as it limits the movement of the same within the facility.

The operative station of the invention, as conceived herein, can in fact be easily moved close to the unloading sites of the kinescopes, thus avoiding the inverse operation of transporting the kinescopes from the unloading sites to the operating equipment, typically carried out with the known systems.

The above objectives and advantages will appear more evident from the description of preferred embodiments of the invention, provided for illustrative and non-limiting purposes with reference to the following drawings in which:
- figure 1 is a first axonometric view of the operative station according to the invention;
- figure 2 is a second axonometric view of the operative station according to the invention;
- figure 3 is a simplified and schematic front view of figure 1;
- figure 4 is a simplified and schematic side view of figure 1;
- figure 5 is a plan view of figure 1;
- figure 6 is an embodiment variation of figure 1;
- figure 7 is a simplified and schematic front view of figure 6.

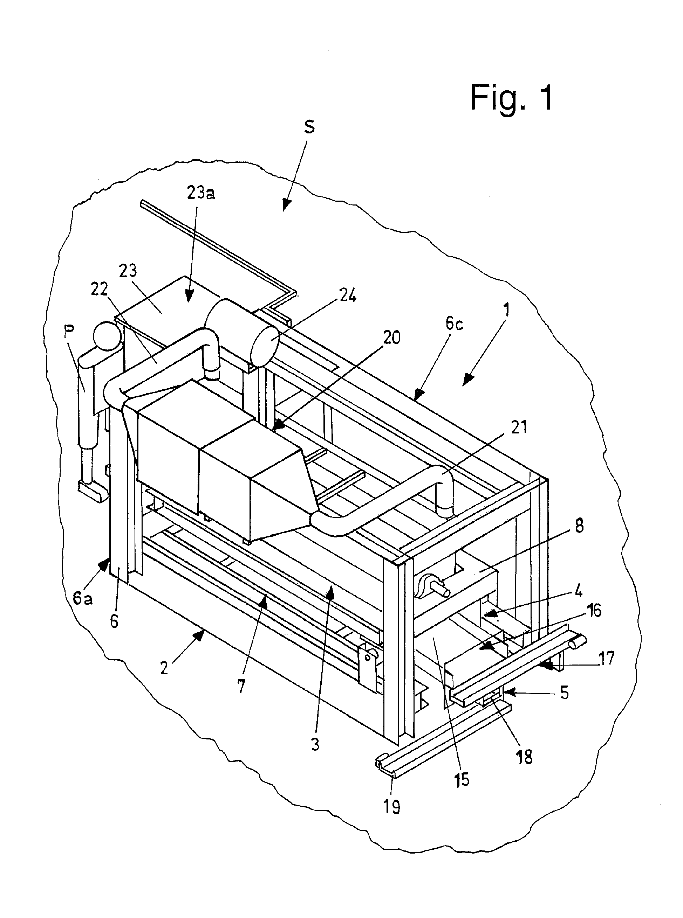

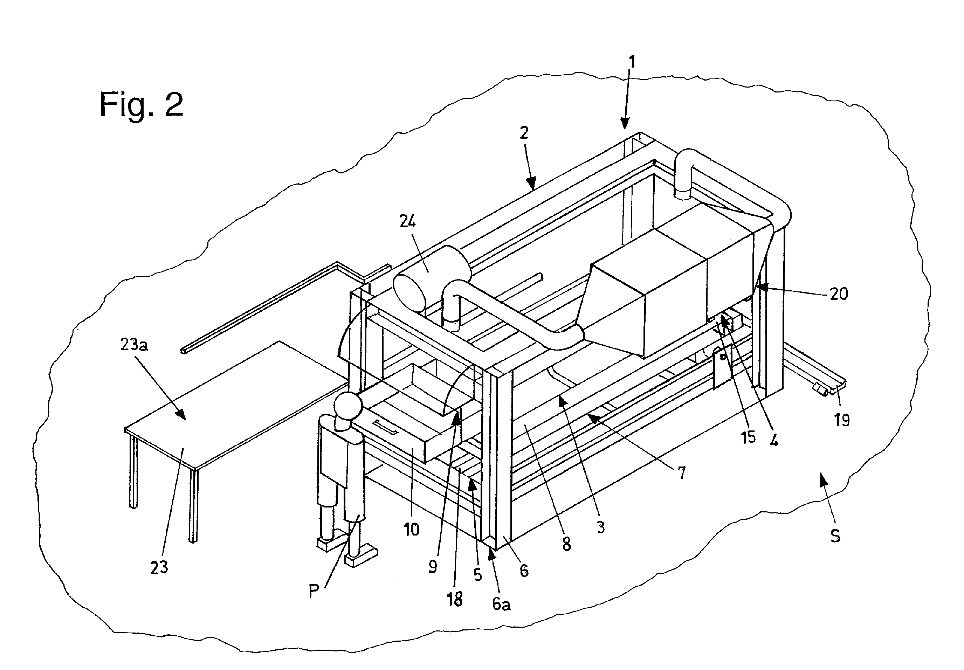

The operative station, used for the recovery of raw materials, mainly shaped pieces made of glass or crystal deriving from the demolition of kinescopes, is illustrated in figures 1 and 2 where it is indicated as a whole with the number 1.

According to the invention, the station 1 includes:
- a carrying structure 2, associated with a supporting surface S, for example the floor of the production site;
- a container 3, internally associated with the carrying structure 2, which receives the raw materials deriving from the demolition of kinescopes and which is connected to driving means, for the sake of simplicity not shown, which move the container 3 to effect the cleaning of the raw materials;
- conveying and unloading means, indicated as a whole with the number 4, situated inside the carrying structure 2, suitable for moving the cleaned raw materials outside the carrying structure 2 for their reuse;
- collection and ejection means, indicated as a whole with 5, contained in the carrying structure 2, which collect the small-sized discarded glass and metal fragments, deriving from the cleaning of the raw materials.

The carrying structure 2 preferably comprises a box-shaped body 6 inside which there is a supporting group, indicated as a whole with 7, of the container 3, positioned in the substantially central part 6a of the box-shaped body 6.

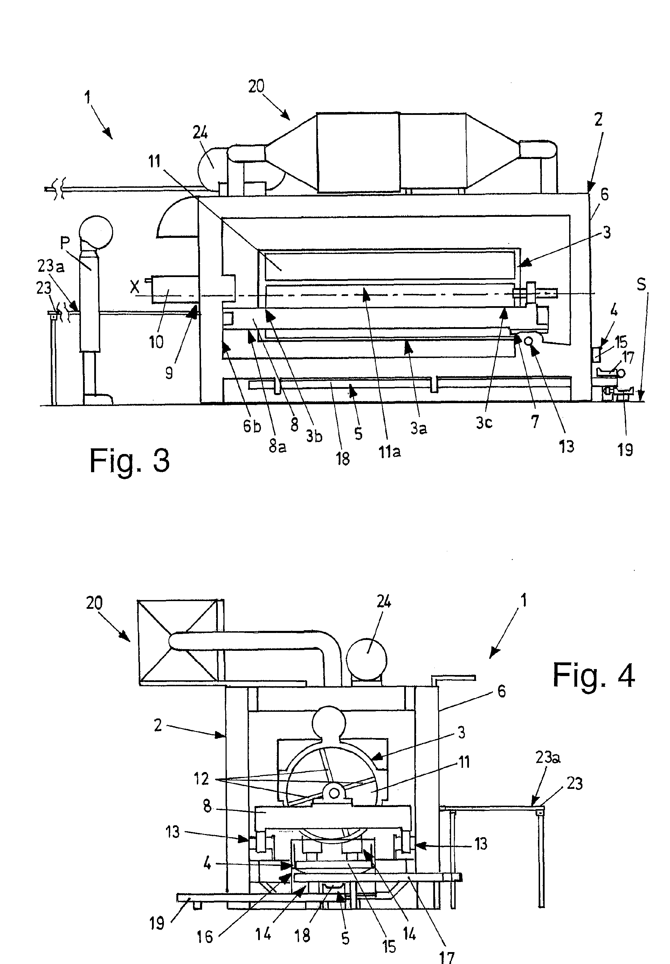

The supporting group 7 comprises a rectangular base 8, fixed to the inner wall 6b of the box-shaped body 6, which has a central pass-through hole, not shown, in which the container 3 is partially housed, to allow the bottom 3a of the same to protrude from the lower wall 8a of the rectangular base 8, as better shown in figure 3.

Figures 2 and 3 show that the box-shaped body 6 has a loading mouth 9 of the raw materials, accessible by an operator P and communicating with a first end 3b of the container 3.

The loading mouth 9 preferably comprises a gridded surface 10 at disposal to the operator P, coupled with the loading mouth 9 and communicating with the container 3 by means of a chute 25.

The gridded surface 10, on which the operator P effects the breakage of the kinescope to obtain the raw materials, only allows the smallest pieces of broken glass to fall onto the chute 25.

According to the preferred embodiment of the invention described herein, the container 3 comprises a rotating basket 11, having a longitudinal horizontal axis X around which it is placed in rotation by the driving means.

The rotating basket 11, having different dimensions according to the operating demands, is of the type known to experts in the field, having a series of pass-through holes, not shown and uniformly distributed on the side surface 11a.

The rotating basket 11 is also equipped with a series of blades 12 which can be seen in fig. 4, protruding from the inner wall of the rotating basket 11.

As is customary, the blades 12 are envisaged for lifting the raw materials up to a certain height from where they are released for free fall, thus causing an increase in the friction and smoothing degree of the raw materials being processed, thus accelerating the cleaning process of the contaminated raw materials.

The rotating basket 11, advantageously but not necessarily, operates under dry conditions obtaining, with respect to certain known solutions which use water for the washing of the raw materials, a saving of this natural resource with a lower environmental impact, normally associated with the disposal of the water itself after treatment.

If the raw materials come from kinescopes demolished in a machine which also effects their partial cleaning of the surface phosphorous layer, the rotating basket 11 only separates the residual slag from the glass raw materials, in the form of small fragments and thin powders, generated by the reciprocal friction of the same raw materials.

If the kinescopes have only been broken, by hand, for example, on the part of the operator P, without at least partially removing the phosphorous surface layer from the resulting glass raw materials, the rotating basket 11 will clean more contaminated raw materials, still coated with the layer of phosphorous particles.

According to further embodiments of the invention, the rotating basket can contain, in its interior, a liquid bath at a pre-established temperature, which contributes to the washing of the raw materials from the contaminating slag.

To favour the falling of the discarded fragments from the container 3 through the holes, the operative station 1 comprises first moving means, indicated as a whole with 13, associated with the box-shaped body 6 and integral with the rectangular base 8, which make the base 8 itself moveable on a substantially horizontal plane.

The rotating basket 11 supported by the rectangular base 8, consequently also becomes moveable on this plane, acting as a sort of sieve for the selection of materials differing in dimensions.

The first moving means 13 comprise, for example, linear pneumatic actuators.

The operative station 1 also comprises second moving means, indicated as a whole with 14, associated below with the container 3 which, at the end of the cleaning phase, tilt the container 3 to allow the raw materials to be sent to the conveying means 4.

The conveying and unloading means 4 comprise a sloping hopper 15, fixed below and to the side of the rectangular base 8 of the supporting group 7 and communicating on one side with a second end 3c of the container 3 to receive the cleaned raw materials and on the opposite side with an opening 16 situated in the box-shaped body 6 on the opposite side with respect to the loading mouth 9.

The conveying and unloading means 4 also optionally comprise a first conveyor belt 17 accessible to the operator P, protruding sideways from the box-shaped body 6, in correspondence with the opening 16 and in a position beneath the sloping hopper 15, from which it receives the cleaned raw materials.

With respect to the collection and ejection means 5, these include a second conveyor belt 18, below and facing the bottom 3a of the container 3, situated below the rectangular base 8 and communicating with the opening 16.

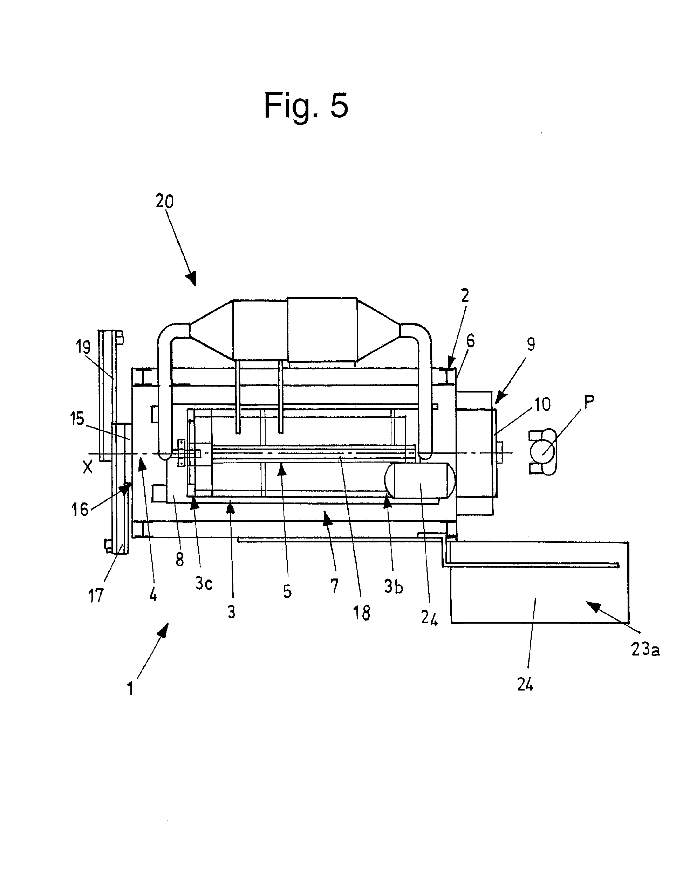

Figure 5 shows that the second conveyor belt 18 extends for a length substantially equal to the main development dimension of the container 3, i.e. in this case, the length of the rotating basket 11.

The collection and ejection means 5 also comprise a third conveyor belt 19 accessible to the operator P, protruding laterally from the box-shaped body 6 in correspondence with the opening 16 and in a position underlying the second conveyor belt 18, from which it receives the discarded fragments.

The first and third conveyor belt 17, 19 extend linearly and are oriented according to directions parallel and opposite one each other.

In accordance with other embodiments of the invention, not illustrated, the conveyor belts can be replaced by Archimedean screws.

The above figures show that the operative station 1 comprises suction means, indicated as a whole with 20, of dust, impurities and other substances, associated above with the carrying structure 2.

The suction means 20, according to a common embodiment, communicate with the internal environment of the carrying structure 2 by means of a drawing pipe 21 and a supply pipe 22.

The operative station 1 preferably comprises a work bench 23 of the raw materials to be cleaned, slidingly and rotatingly coupled with the outer wall 6c of the box-shaped body 6 defining a non-operative position, in which the rest surface 23a of the work bench 23 is close to and facing the outer wall 6c of the box-shaped body, and an operative position, in which the work bench 23 is positioned on the supporting surface S to be at the disposal of the operator P, for example for receiving the kinescopes to be manually demolished or raw materials resulting from the demolition.

The operative station 1 also comprises a compressor 24, coupled with the carrying structure 2, which feeds the first and second moving means 13 and 14 respectively, in addition to possible pneumatic tools at the disposal of the operator P.

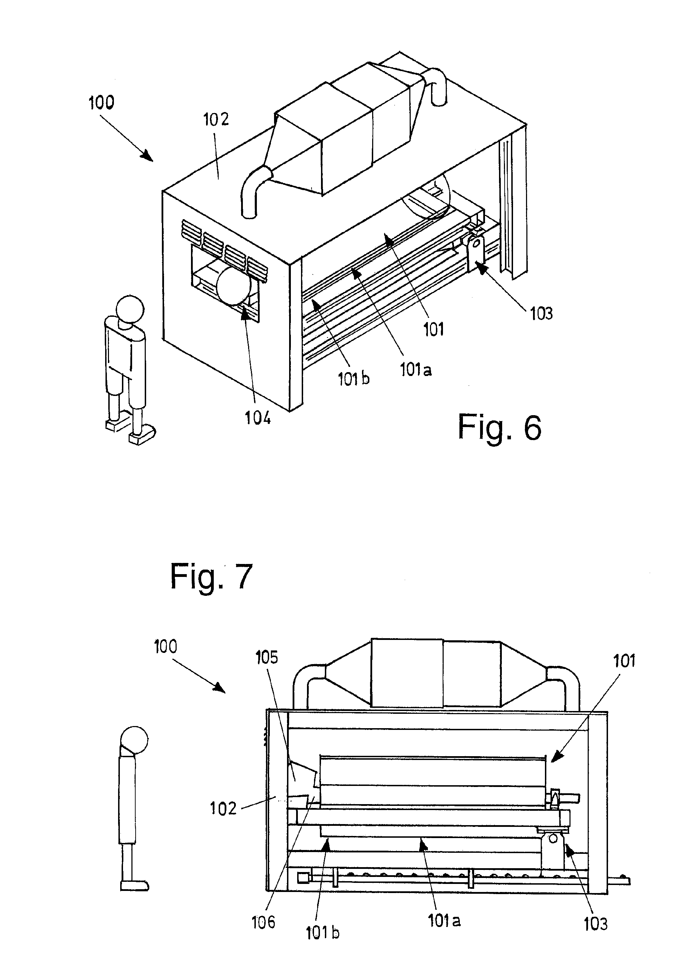

Figures 6 and 7 provided a simplified view of an embodiment variant of the invention in which the operative station, now indicated as a whole with 100, differs from that described above in the different form of the loading mouth 104 situated in the box-shaped body 102.

In this case, in fact, the outlet mouth 104 comprises a tubular connection 105, fixed to the supporting group 103 inside the box-shaped body 102.

The tubular connection 105 is inserted at one side into the outlet mouth 104 and at the opposite side it is equipped with an appendage 106 situated inside the first end 101b and in correspondence with the bottom 101a of the container 101.

When functioning, the operator P positions the glass parts of the kinescopes on the gridded surface 10 where they are demolished by means of a tool which can also be generic, such as for example a hammer.

The separation of the parts forming the kinescopes is effected manually by the operator P on the work bench 24 or by means of an operating machine in which the partial removal of the phosphorous surface layer which coats the screen of the kinescopes, is also effected.

The positioning of the glass raw materials on the gridded surface 10 is preferably effected after dividing the pieces of screen from the pieces of cone of the kinescope, in order to obtain distinct end-products of different qualities and destined for different uses, at the outlet of the operative station 1.

The raw materials therefore reach the container 3, consisting herein of a rotating basket 11 which, moved by the driving means, begins to rotate around the longitudinal axis X.

In this way, the raw materials are continuously lifted and dropped towards the bottom 3a of the container 3, being remixed various times with each other.

During their movement inside the container 3, the raw materials are subjected to friction against each other according to a mechanical action which removes the phosphorous surface layer which coats them, thus cleaning them.

The reciprocal friction contemporaneously smoothes the side surface of the raw materials which, at the end of the process, can be handles by the operator P with extreme safety, without the danger of being wounded.

During the processing, the fine powders or other impurities are removed from inside the carrying structure 2 by suction means 20 which withhold these contaminating agents, after passage through the drawing pipe 21.

The air produced by the suction means 20 is in turn sent by means of the supply pipe 22 inside the carrying structure 2 and used for facilitating the moving of other fine powders which must be sent into the drawing pipe 21, according to a closed cycle circuit.

While the container 3 is moving, the phosphorous particles which are gradually removed from the raw materials and tiny pieces of glass and metal which are inevitably generated in the container 3, fall by gravity onto the second conveyor belt 18 passing through pass-through holes. When, at the end of the process, the operator P stops the driving means, it may easily happen that some of the discarded fragments are still present on the bottom 3a of the container 3.

Before sending the cleaned raw materials outside, the operator P consequently activates the first moving means 13 which, by exerting an essentially translational movement to the rectangular base 8 and container 3 supported thereby, allows the residual fragments to pass through the holes and fall by gravity onto the second conveyor belt 18.

The operator P subsequently tilts the container 3, moving the end 3b close to the supporting surface S, so that the definitively cleaned raw materials reach first the tilted hopper 15 and then the first conveyor belt 17, from which they are removed by the operator P for new uses.

The degree of cleaning and surface smoothing of the raw materials obtained with the operative station 1 of the invention advantageously allows them to be used as decorative items or in any case to be considered as inert materials.

The discarded fragments, on the other hand, are sent by the second conveyor belt 18 to the third conveyor belt 19 from where they are suitably disposed of in specific disposal sites.

The functioning of the operative station 100 is completely analogous to that of the operative station 1, with the only difference that the raw materials to be treated are initially positioned by the operator P in the tubular connection 105 of the outlet mouth 104.

On the basis of what is specified above, it is evident how the operative station for the recovery of raw materials deriving from the demolition of kinescopes according to the invention achieves the objectives and provides the advantages indicated above.

In the operating phase, modifications can be applied to the operative station for the recovery of raw materials deriving from the demolition of kinescopes of the invention consisting, for example, in a different type of container and moved in a different manner with respect to what is described above.

Furthermore, there can also be embodiment variants consisting of a different supporting structure than that described above, which does not jeopardize the advantage provided by the present invention.

Numerous other variants can obviously be applied to the operative station in question, all included in the novelty principles inherent in the inventive concept expressed herein. It is also evident that, in the practical embodiment of the invention, the materials, forms and dimensions of the details illustrated can vary according to demands, and be substituted with other technically equivalent elements.

## Claims

1. An operative station (1; 100) for the recovery of raw materials deriving from the demolition of kinescopes, **characterized in that** it comprises:
- a carrying structure (2), suitable for being associated with a supporting surface (S);
- a container (3, 101), internally associated with said carrying structure (2), suitable for receiving said raw materials deriving from said demolition of said kinescopes and being connected to driving means, suitable for moving said container to effect the cleaning of said raw materials;
- conveying and unloading means (4), situated inside said carrying structure (2), suitable for conveying said cleaned raw materials outside said carrying structure (2) for their reuse;
- collection and ejection means (5), contained in said carrying structure (2), suitable for collecting the discarded fragments, deriving from said cleaning of said raw materials.

2. The station (1; 100) according to claim 1, **characterized in that** said carrying structure (2) comprises a box-shaped body (6; 102) in which there is a supporting group (7; 103) of said container (3; 101), situated in the substantially central part (6a) of said box-shaped body (6; 102).

3. The station (1; 100) according to claim 2,
**characterized in that** said supporting group (7; 103) comprises a rectangular base (8), fixed to the inner wall (6b) of said box-shaped body (6; 102) and has a central pass-through hole in which said container (3; 101) is partially housed to allow the bottom (3a) of said container (3; 101) to protrude from the lower wall (8a) of said rectangular base (8).

4. The station (1; 100) according to claim 2,
**characterized in that** said box-shaped body (6; 102) has a loading mouth (9; 104) of said raw materials, accessible to an operator (P) and communicating with a first end (3b; 101b) of said container (3; 101).

5. The station (1) according to claim 4, **characterized in that** said loading mouth (9) comprises a gridded surface (10) available to the operator (P), coupled with said loading mouth (9) and communicating with said container (3) by means of a chute (25).

6. The station (100) according to claim 4,
**characterized in that** said loading mouth (104) comprises a tubular connection (105), fixed to said supporting group (103) inside said box-shaped body (102), inserted in said loading mouth (104) and having an appendage (106) situated inside said first end (101b) and in correspondence with the bottom (101a) of said container (101).

7. The station (1; 100) according to claim 3,
**characterized in that** said container (3; 101) comprises a rotating basket (11) which defines a horizontal longitudinal axis (X) around which it is placed in rotation by said driving means.

8. The station (1) according to claim 7, **characterized in that** said container (3; 101) has a series of pass-through holes at least in the lower area of the side surface (3d).

9. The station (1; 100) according to claim 8, **characterized in that** it comprises first moving means (13), associated with said box-shaped body (6; 102) and integral with said rectangular base (8), suitable for allowing said base (8) to move on a substantially horizontal plane to favour the falling of said discarded fragments from said container (3; 102) through said pass-through holes.

10. The station (1; 100) according to claim 9, **characterized in that** it comprises second moving means (14), associated below said container (3; 102), suitable for tilting said container (3; 102) to allow said purified raw materials to be sent to said conveying means (4).

11. The station (1; 100) according to claim 3, **characterized in that** said conveying means (4) comprise a sloping hopper (15) fixed laterally and below to said rectangular base (8) of said supporting group (7; 103) and communicating on one side with a second end of said container (3; 102) to receive said cleaned raw materials and on the opposite side with an opening (16) situated in said box-shaped body (6; 102) on the opposite side with respect to said loading mouth (9).

12. The station (1; 100) according to claim 11, **characterized in that** said conveying and unloading means (4) comprise a first conveyor belt (17) accessible to the operator (P), protruding laterally from said box-shaped body (6) in correspondence with said opening (16) and in a position underlying said tilted hopper (15), from which it receives said cleaned raw materials.

13. The station (1; 100) according to claim 12, **characterized in that** said collection and unloading means (5) comprise a second conveyor belt (18), underlying and facing said bottom (3a) of said container (3; 101), positioned below said rectangular base (8) and communicating with said opening (16).

14. The station (1; 100) according to claim 13, **characterized in that** said second conveyor belt (18) extends for a length which is substantially equal to the dimension according to which said container (3; 101) prevalently extends.

15. The station (1; 100) according to claim 13, **characterized in that** said collection and ejection means (5) comprise a third conveyor belt (19) accessible to the operator (P), protruding laterally from said box-shaped body (6; 102) in correspondence with said opening (16) and in a position underlying said second conveyor belt (18), from which it receives said discarded fragments.

16. The station (1; 100) according to claim 15, **characterized in that** said first and third conveyor belt (17, 19) extend linearly and are oriented according to directions parallel and opposite one each other.

17. The station (1; 100) according to claim 1, **characterized in that** it comprises suction means (20) of fine powders, associated above said carrying structure (2).

18. The station (1; 100) according to claim 17, **characterized in that** said suction means (20) communicate with the internal environment of said carrying structure (2) by means of a drawing pipe (21) and a supply pipe (22).

19. The station (1; 100) according to claim 2, **characterized in that** it comprises a work bench (23), slidingly and rotatingly coupled with the outer wall (6c) of said box-shaped body (6; 102) to define a non-operative position, in which the rest surface (23a) of said work bench (23) is close to and facing said outer wall (6c) of said box-shaped body (6; 102), and an operative position, in which said work bench (23) is positioned on said supporting surface (S) to be at the disposal of the operator (P).

20. The station (1; 100) according to claim 10, **characterized in that** it comprises a compressor (24), coupled with said carrying structure (2), suitable for feeding said first and/or second moving means (13, 14) and/or possible pneumatic devices at the disposal of the operator (P).
